# EUROPÄISCHE PATENTSCHRIFT

(11) **EP 0 508 289 B1**
(45) Veröffentlichungstag und Bekanntmachung des Hinweises auf die Patenterteilung: **31.07.1996**
(21) Anmeldenummer: 92105589.3
(22) Anmeldetag: 01.04.1992
(51) Int. Cl.: G01G 17/06, G01G 13/06, G01G 13/285, G05D 7/00

(54) **Verfahren zur Kontrolle einer Flüssigkeitsmenge und Vorrichtung**
Process and device for checking of a quantity of liquid
Procédé pour le contrôle d'une quantité de liquide et dispositif

(30) Priorität: 12.04.1991 DE 4112091
(43) Veröffentlichungstag der Anmeldung: 14.10.1992
(73) Patentinhaber: Heller, Günther, Dr.-Ing., D-67434 Neustadt (DE)
(72) Erfinder: Heller, Günther, Dr.-Ing., W-6730 Neustadt-Hambach (DE); Pfeifer, Jürgen, W-6915 Dossenheim (DE)
(74) Vertreter: Patentanwälte Ruff, Beier, Schöndorf und Mütschele

(56) Entgegenhaltungen:
- EP-A- 0 166 562
- EP-A- 0 353 197
- EP-A- 0 406 092
- DE-A- 3 807 414
- FR-A- 2 366 612
- US-A- 4 030 640

## Beschreibung

Die Erfindung betrifft ein Verfahren zur Kontrolle der Menge mindestens einer durch einen flexiblen Schlauch fließenden oder geflossenen Flüssigkeit.

In der Praxis tritt häufig das Problem auf, Flüssigkeitsmengen auf einfache Weise zuverlässig zu bestimmen. So müssen nicht nur im Labor, sondern auch bei der industriellen Fertigung häufig gleiche oder verschiedene Flüssigkeitsmengen bereitgestellt werden, wobei die Anforderungen an die Genauigkeit der Bestimmung unterschiedlich sein können. Der daraus resultierende Konflikt zwischen der einerseits geforderten Schnelligkeit der Bestimmung und der andererseits erwünschten Genauigkeit der Bestimmung kann oft nicht zufriedenstellend gelöst werden.

Es gibt bereits Verfahren, bei denen die Flüssigkeit durch zwei verschiedene Ventile (z.B. Magnetventile), die das Zudosieren einer großen bzw. kleinen Flüssigkeitsmenge erlauben, hindurchgelassen wird. Dieses Verfahren hat jedoch den Nachteil, daß die Ventile mit dem durchströmenden Medium in Kontakt kommen. Die Ventile müssen deshalb immer wieder gereinigt werden und es ist möglich, daß das Medium das Material der Ventile beispielsweise in Form von Korrosion angreift.

Die Erfindung stellt sich deshalb die Aufgabe, ein Verfahren zur Verfügung zu stellen, mit dem Flüssigkeitsmengen schnell und mit relativ hoher Genauigkeit bestimmt werden können. Das Verfahren soll dabei ohne großen Aufwand die reproduzierbare Bestimmung der Flüssigkeitsmenge ermöglichen.

Diese Aufgabe wird dadurch gelöst, daß die Menge der durch den Schlauch strömenden oder geströmten Flüssigkeit als Istwert automatisch bestimmt wird, der erhaltene Istwert mit einem vorgegebenen Sollwert verglichen wird und durchströmbare Querschnitt des Schlauches an einer Stelle in Abhängigkeit der Differenz von Ist- zu Sollwert automatisch konstantgehalten oder verändert wird. Dabei ist es vorteilhaft, wenn die Veränderung des Schlauchquerschnitts schrittweise erfolgt. Dies kann insbesondere mit Hilfe einer durch einen Schrittmotor bewegbaren Vorrichtung geschehen.

Zur Verringerung des durchströmbaren Querschnitts wird der Schlauch vorzugsweise mit Hilfe eines Quetschelements linienförmig gegen eine Gegenfläche gedrückt. Das Quetschelement ist dabei insbesondere ein Bolzen, der in Querrichtung zum Schlauch gegen diesen gedrückt wird. Da dem Schlauch auf der dem Bolzen gegenüberliegenden Seite eine Gegenfläche zugeordnet ist, wird durch die Bewegung des Bolzens der Schlauchquerschnitt verringert. Wird der Bolzen in entgegengesetzter Richtung bewegt, vergrößert sich der Schlauchquerschnitt wieder. Auf diese Weise kann der Schlauchquerschnitt zwischen einem vollständig geöffneten Zustand und einem völlig geschlossenen Zustand variiert werden.

Die beschriebene Ausführungsform hat den Vorteil, daß die zur Veränderung des Schlauchquerschnitts vorgesehene Mechanik mit dem im Schlauch strömenden Medium nicht in Berührung kommt. Dadurch kann ein negativer Einfluß des Mediums auf die mechanischen Teile ausgeschlossen werden. Da das Verschließen und Öffnen des Schlauches schrittweise erfolgt, kann bei entsprechender Registrierung der Schrittzahl ein bestimmter Schlauchquerschnitt reproduzierbar eingestellt werden. Auf diese Weise ist eine zuverlässige Wiederholung der einzelnen Vorgänge und damit der Mengen- und Durchflußbestimmung der Flüssigkeit möglich.

Nach der Erfindung können mehrere Flüssigkeiten nacheinander oder miteinander bestimmt werden. Dies wird dadurch erreicht, daß die Querschnitte mehrerer Schläuche, die ggf. von verschiedenen Flüssigkeiten durchströmt werden, beispielsweise mit Hilfe mehrerer Schrittmotoren verändert werden. Dabei kann die Menge der durch die Schläuche strömenden Flüssigkeiten mit Hilfe eines Meßgerätes gleichzeitig bestimmt werden. Es ist aber auch möglich, verschiedene Flüssigkeitsmengen getrennt mit Hilfe verschiedener Meßgeräte zu bestimmen und die einzelnen Flüssigkeitsmengen nach dieser Bestimmung ggf. zu vereinigen.

In Weiterbildung ist der Schlauch von voller Öffnung aus innerhalb von weniger als einer Sekunde vollständig verschließbar. Dies hat den Vorteil, daß der Flüssigkeitsstrom schnell unterbrochen und damit die Genauigkeit der Bestimmung erhöht wird. Umgekehrt ist auch die vollständige Öffnung des Schlauches innerhalb des gleichen Zeitraumes möglich.

Es ist vorteilhaft, wenn zum Vergleich von Ist- und Sollwert sowie zur Einstellung des Schlauchquerschnitts ein Mikrocomputer, Mikrocontroller oder Personalcomputer verwendet wird. Durch den im Rechner erfolgenden Vergleich der Daten und die rechnergesteuerte Bewegung beispielsweise des Schrittmotors wird die Bestimmung vereinfacht und beschleunigt. Gleichzeitig lassen sich verschiedene Bestimmungen besser vergleichen und somit die Reproduzierbarkeit der Ergebnisse weiter verbessern.

Eine bevorzugte Ausführungsform des erfindungsgemäßen Verfahrens liegt vor, wenn zum Abwiegen von Flüssigkeiten der Istwert der durch den Schlauch geflossenen Flüssigkeitsmenge auf einer Waage bestimmt wird und bei Vorliegen der gewünschten Flüssigkeitsmenge der Schlauch vollständig verschlossen wird. Die Menge der Flüssigkeit kann somit in einfacher Weise durch eine Gewichtsmessung bestimmt werden. Auch diese Ausführungsform kann so abgewandelt sein, daß mehrere Flüssigkeiten gleichzeitig oder nacheinander bestimmt werden. So können beispielsweise mehrere Schläuche, die gleiche oder verschiedene Flüssigkeiten enthalten und die durch je einen Schrittmotor verschließbar sind, einer Waage zugeordnet sein. Genauso ist es möglich, jedem Schlauch eine eigene Waage zuzuordnen und die Gewichtsmenge jeder Flüssigkeit getrennt zu bestimmen. Zum Vergleich von Ist- und Sollwert sowie zur Einstellung des Schlauchquerschnitts kann bei solchen Ausführungsformen ein oder mehrere Mikrocomputer, Mikrocontroller oder Personalcomputer verwendet werden.

Bei allen Ausführungsformen ist es vorteilhaft, wenn vor der Wägung der Nullpunkt der Waage mit Hilfe dieser Geräte eingestellt wird. Dies hat den Vorteil, daß das Verfahren weiter automatisiert und damit die Schnelligkeit der Bestimmung weiter erhöht wird.

In Weiterbildung wird das erfindungsgemäße Verfahren so durchgeführt, daß die abzuwiegende Flüssigkeit in mehreren Schritten durch den Schlauch hindurchgelassen wird, der Schlauch zwischen den einzelnen Schritten vollständig geschlossen wird und der Istwert der Flüssigkeitsmenge zwischen den einzelnen Schritten jedesmal bestimmt wird. Insbesondere wird dabei der durchströmbare Querschnitt des Schlauches mindestens bei einem Teil der Schritte variiert, d.h. vergrößert oder verkleinert. Auf diese Weise wird erreicht, daß je nach Art und Menge der abzuwiegenden Flüssigkeit das Verfahren flexibel durchgeführt werden kann. Bei dieser Ausführungsform ist es weiter bevorzugt, wenn zuerst ein größerer Teil der abzuwiegenden Flüssigkeit bei einem großen durchströmbaren Querschnitt des Schlauches durchgelassen wird und anschließend der Rest der abzuwiegenden Flüssigkeit in einem oder mehreren weiteren Schritten bei kleineren durchströmbaren Querschnitten durchgelassen wird. Dabei kann der größere Teil der abzuwiegenden Flüssigkeit insbesondere bei vollständig geöffnetem Schlauch hindurchgelassen werden. Solche Ausführungsformen haben den Vorteil, daß am Anfang größere Flüssigkeitsmengen schnell hindurchgelassen und bestimmt werden, während die weiteren kleineren Mengen langsamer hindurchgelassen werden können. Durch den schnelleren Anfangsschritt kann die für die Bestimmung der Gesamtmenge erforderliche Zeit verringert werden.

Nach der Erfindung kann das Verfahren zum Abwiegen von Flüssigkeiten noch weiter verfeinert sein. Dabei wird insbesondere beim Durchlassen von kleineren Teilen der Flüssigkeit der Querschnitt des Schlauches in regelmäßigen Zeitintervallen verändert. Insbesondere wird dabei der Schlauch abwechselnd auf einen bestimmten Querschnitt geöffnet und wieder geschlossen. Dadurch wird erreicht, daß die dabei durch den Schlauch strömenden Flüssigkeitsmengen in kleinen, im wesentlichen gleich großen Mengen bestimmt werden können. Die Flüssigkeitsmenge wird sozusagen in kleinen Portionen durchgelassen und es wird auf diese Weise eine schrittweise Annäherung des Istwertes an den Sollwert erreicht. Dabei ist es möglich, den Schlauch durch das abwechselnde Schließen und Öffnen auf einen bestimmten Querschnitt in leichte Vibration zu versetzen. Dies hat den zusätzlichen Vorteil, daß ein ggf. mögliches Anhaften der Flüssigkeit an der Innenwandung des Schlauches und an der der Waage zugeordneten Austrittsöffnung des Schlauches verhindert wird. Beim Verschließen des Schlauches wird damit eine vollständige Entleerung des Teiles des Schlauches erreicht, der sich hinter bzw. unterhalb der verschließbaren Stelle des Schlauches befindet. Die Frequenz, mit der der Schlauch abwechselnd auf einem bestimmten Querschnitt geöffnet und wieder geschlossen wird, kann bis zu 10 Hz, insbesondere 3 Hz betragen.

Weiterhin ist es nach der Erfindung vorteilhaft, wenn vor dem Durchlassen von kleineren Teilen der Flüssigkeit der Querschnitt des Schlauches bestimmt wird, bei dem gerade noch Flüssigkeit durch den Schlauch hindurchtreten kann und wenn anschließend der Schlauch beim Durchlassen der Flüssigkeit auf diesen Querschnitt geöffnet wird. Dies ist insbesondere von Vorteil bei der Bestimmung von kleinsten Flüssigkeitsmengen, also wenn beispielsweise eine möglichst genaue Annäherung des Istwertes an den Sollwert angestrebt wird. Dadurch wird die Genauigkeit des Verfahrens weiter erhöht. Die Bestimmung des "minimalen" Schlauchquerschnitts, bei dem gerade noch Flüssigkeit durch den Schlauch hindurchtritt, kann deshalb von Vorteil sein, da dieser Querschnitt in Abhängigkeit von verschiedenen Parametern variiert. So ist er beispielsweise von der verwendeten Flüssigkeit, dem benutzten Schlauch, der Umgebungstemperatur und anderen Faktoren abhängig.

Bei den Ausführungsformen, bei denen der Schlauchquerschnitt in regelmäßigen Zeitintervallen variiert wird, ist es bevorzugt, wenn der Zeitraum zwischen Öffnen und Schließen des Schlauches und einem erneuten Öffnen und Schließen in Abhängigkeit von der abzuwiegenden Flüssigkeitsmenge variiert wird. Dies hat den Vorteil, daß, je nach erforderlicher Genauigkeit, ein ausreichender Zeitraum für das Eintarieren der Waage zur Verfügung steht. Eine genauere Abgleichung von Ist- und Sollwert wird ermöglicht. Dabei ist es im Normalfall so, daß der Zeitraum zwischen Öffnen und Schließen des Schlauches und einem erneuten Öffnen und Schließen um so größer ist, je kleiner die abzuwiegende Flüssigkeitsmenge ist.

Einer Anwendung des erfindungsgemäßen Verfahrens sind prinzipiell keine Grenzen gesetzt. So können Flüssigkeiten niederer, mittlerer und hoher Viskosität zuverlässig verwendet werden. Auch die verschiedenen chemischen Eigenschaften der zu bestimmenden Flüssigkeiten stehen einer Anwendung des Verfahrens nicht entgegen. Diese Eigenschaften werden sich im Normalfall lediglich auf den zu verwendenden Schlauchtyp auswirken, da dieser eine ausreichende Stabilität gegenüber dem durchströmenden Medium aufweisen muß. So können nach der Erfindung beispielsweise Viton-, Teflon- und Silikonschläuche in Abhängigkeit von der verwendeten Flüssigkeit eingesetzt werden. Das erfindungsgemäße Verfahren ist nicht auf reine Flüssigkeiten, wie sie beispielsweise im Labor Verwendung finden, beschränkt. Ein Einsatz in der Industrie ist ebenfalls möglich, wobei nicht nur technische Flüssigkeiten bestimmt werden können, sondern auch Lebensmittel, wie beispielsweise Weine, Säfte und ähnliches.

Auch die Menge der zu abzuwiegenden Flüssigkeiten ist nicht begrenzt. Es ist jedoch bevorzugt, wenn Flüssigkeitsmengen bis ca. 10 kg abgewogen werden. Eine bevorzugte Untergrenze für die Gewichtsbestimmung liegt dabei bei einem Gewicht von ca. 10 g.

Das erfindungsgemäße Verfahren arbeitet mit ausreichender Genauigkeit, wobei insbesondere die Abweichungen des Istwertes vom Sollwert geringer als 0,1 % sind. Bei den Ausführungsformen zum Abwiegen von Flüssigkeiten ist die Genauigkeit vorzugsweise besser als 0,1 g, wobei das Verfahren insbesondere mit einer Genauigkeit von 0,05 g durchgeführt wird. Je nach Durchführung des Verfahrens kann der Istwert vom Sollwert nach oben und nach unten mit verschiedenen Werten abweichen. So ist es beispielsweise möglich, daß das Istgewicht vom Sollgewicht nach unten eine geringere Abweichung aufweist als nach oben.

Die Erfindung betrifft weiterhin eine Vorrichtung zur Durchführung des Verfahrens zum Abwiegen von Flüssigkeiten. Diese Vorrichtung weist mindestens eine Waage, mindestens einen mit einem Vorratsbehälter für eine Flüssigkeit verbundenen flexiblen Schlauch, mindestens einen Schrittmotor sowie einen an der Kupplung des Schrittmotors befestigten Bolzen auf. Dabei ist der Schlauch mindestens teilweise an einer Gegenfläche vorbeigeführt und der an der Kupplung befestigte Bolzen ist der der Gegenfläche gegenüberliegenden Seite des Schlauches in Querrichtung zugeordnet und ist schrittweise mit Hilfe des Schrittmotors linienförmig gegen den Schlauch bewegbar. Die erfindungsgemäße Vorrichtung kann auch eine Pumpe aufweisen, die die zu bestimmende Flüssigkeit aus dem Vorratsbehälter durch den Schlauch befördert. Auf der Waage kann sich ein geeigneter Behälter zur Aufnahme der abzuwiegenden Flüssigkeit befinden.

Durch die gewählte Konstruktion wird erreicht, daß der Schlauch nicht nur zuverlässig geschlossen und wieder geöffnet werden kann, sondern daß eine variable, exakt produzierbare Einstellung des Schlauchquerschnitts möglich ist. Dabei wird der Bolzen über die schrittweise Bewegung der Kupplung des Schrittmotors gegen den Schlauch gedrückt. Da der Schlauch auf der dem Bolzen gegenüberliegenden Seite an der Gegenfläche anliegt, wird auf diese Weise der Schlauchquerschnitt schrittweise verkleinert. Die Vorrichtung ist so ausgestaltet, daß die vom Bolzen ausgeübte Kraft im wesentlichen senkrecht zur Längsachse des Schlauches wirkt. Es sind jedoch auch Konstruktionen möglich, bei denen der Winkel zwischen Längsrichtung des Schlauches und der auf den Schlauch wirkenden Kraft stärker von 90° abweicht und bei denen zusätzlich eine "rollende" Kraft auf den Schlauch ausgeübt wird. Nach der Erfindung ist der Bolzen bevorzugt an einer Kupplungsscheibe befestigt, deren Durchmesser groß genug ist, um eine im wesentlichen senkrechte Kraft auf dem Schlauch zu erzeugen.

Bei dem nach der Erfindung verwendeten Schrittmotor handelt es sich um ein übliches Gerät, mit dem einzelne Positionen, ggf. über ein geeignetes Untersetzungsgetriebe angefahren werden können.

In Weiterbildung der Erfindung ist es bevorzugt, wenn an der Kupplung eine Stange befestigt ist, mit deren Hilfe ein Mikroschalter betätigt werden kann. Die Stange wird von der Kupplung mitgeführt und betätigt den Mikroschalter, wenn die Motorstellung erreicht wird, bei der der Schlauch vollständig geschlossen ist. Auf diese Weise kann auch das vollständige Schließen des Schlauches exakt erfaßt werden. Am Übergang zwischen der Stange und dem Mikroschalter kann ein geeignetes Dämpfungselement, wie beispielsweise ein Stück Filz, befestigt sein, um zu verhindern, daß ggf. entstehende Vibrationen übertragen werden.

Es ist bevorzugt, wenn der Bolzen an seiner Außenseite einen Kranz aufweist. Auf diese Weise wird die Kraft des Bolzens auf eine kleinere Fläche des Schlauches ausgeübt und somit ein exakteres SchlieBen des Schlauches ermöglicht.

Es ist nach der Erfindung möglich, verschiedene flexible Schlaucharten zu verwenden. Diese können in Abhängigkeit von der zu bestimmenden Flüssigkeit ausgewählt werden. Es ist bevorzugt, Silikonschläuche zu verwenden, da diese eine gute Flexibilität besitzen und die meisten Flüssigkeiten an der Innenseite solcher Schläuche nicht stark haften.

Weitere Merkmale der Erfindung ergeben sich aus den nachfolgenden Beschreibungen von bevorzugten Ausführungsformen in Verbindung mit den Unteransprüchen. Hierbei können die einzelnen Merkmale jeweils für sich allein oder zu mehreren in Kombination miteinander verwirklicht sein. Dabei zeigen in den Zeichnungen:
- Fig. 1: die schematische Ansicht einer erfindungsgemäßen Vorrichtung zum Abwiegen von Flüssigkeiten sowie
- Fig. 2: einen Teil der in Fig. 1 dargestellten Vorrichtung in einer Detailansicht.

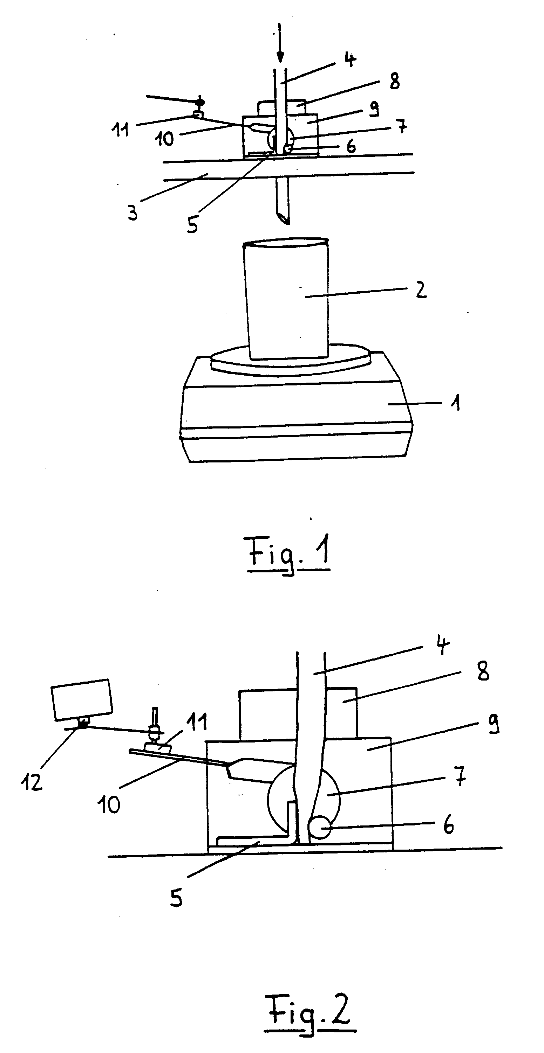

Gemäß Fig. 1 befindet sich auf einer Waage 1 ein Behälter 2 zur Aufnahme der abzuwiegenden Flüssigkeit. Oberhalb des Behälters 2 ist in geeigneter Höhe eine Platte 3 angeordnet, die zur Befestigung bzw. Anordnung der weiteren Bauteile der Vorrichtung dient. Durch die Platte 3 ist ein Schlauch 4 hindurchgeführt, der mit einem Vorratsbehälter für eine Flüssigkeit in Verbindung steht. Dieser Vorratsbehälter ist in Fig. 1 nicht dargestellt. An seinem unteren Ende ist der Schlauch 4 in dem in Fig. 1 dargestellten Beispiel abgeschrägt. Diese Abschrägung dient der Formung des Flüssigkeitsstrahls und verhindert das Anhaften von Flüssigkeitsresten an der Ausflußöffnung. Oberhalb der Platte 3 ist der Schlauch 4 an einer Seitenfläche eines Winkels 5 vorbeigeführt. Diese Fläche des Winkels 5 dient als Gegenfläche für das Abquetschen und Verschließen des Schlauches 4. Auf der dem Winkel 5 gegenüberliegenden Seite des Schlauches 4 befindet sich ein Bolzen 6, der an der Kupplungsscheibe 7 eines Schrittmotors 8 befestigt ist. Zwischen dem Schrittmotor 8 und der Kupplungsscheibe 7 befindet sich die eine Fläche eines Winkels 9, durch die die Kupplung des Schrittmotors 8 hindurchgeführt ist. Diese Fläche des Winkels 9 dient der Fixierung des Schrittmotors 8. Die andere Fläche des Winkels 9 ist auf der Platte 3 befestigt.

Weiterhin ist an der Kupplung des Schrittmotors 8 eine Stange 10 befestigt, die bei Bewegung des Schrittmotors 8 mitbewegt wird. Hat der Schrittmotor 8 die Stellung erreicht, bei der der Schlauch 4 vollständig verschlossen ist, wirkt die Stange 10 auf einen Mikroschalter, der dafür sorgt, daß der Schrittmotor nicht weiterbewegt wird. Vom Mikroschalter ist in Fig. 1 nur der Hebel dargestellt. Um zu verhindern, daß Vibrationen übertragen werden und damit insbesondere der Mikroschalter zu früh betätigt wird, ist auf der Stange 10 zur Dämpfung ein Filz 11 angeordnet.

In Fig. 2 ist der obere Teil der in Fig. 1 gezeigten Vorrichtung nochmals dargestellt. In Fig. 2 läßt sich auch die Funktionsweise der erfindungsgemäßen Vorrichtung genauer erkennen. Fig. 2 zeigt die gleichen Bauteile mit gleicher Numerierung wie Fig. 1. Zusätzlich ist jetzt ein Mikroschalter 12 dargestellt, der über die Stange 10 betätigt wird, wenn der Schlauch 4 vollständig verschlossen ist.

Die Funktionsweise der in den Figuren 1 und 2 dargestellten Vorrichtung läßt sich wie folgt beschreiben. Durch den teilweise oder vollständig geöffneten Schlauch 4 kann Flüssigkeit aus dem nicht dargestellten Vorratsbehälter in den Behälter 2 strömen, der sich auf der Waage 1 befindet. Die Waage 1 und der Schrittmotor 8 sind mit einem Mikrocomputer verbunden, der in den Figuren nicht dargestellt ist. Soll der Schlauch 4 verschlossen oder sein Querschnitt verringert werden, wird der Schrittmotor 8 betätigt. Die schrittweise Bewegung des Schrittmotors 8 wird über die Kupplungsscheibe 7 auf den Bolzen 6 übertragen. Dieser Bolzen 6 wird dadurch linienförmig gegen den Schlauch 4 gedrückt und verringert dessen Querschnitt schrittweise. Durch die von dem Winkel 5 gebildete Gegenfläche kann der Schlauch 4 der Bewegung des Bolzens 6 nicht ausweichen. Ist der Schlauch 4 vollständig verschlossen, wird über die von der Kupplung mitgeführte Stange 10 der Mikroschalter 12 betätigt, so daß eine weitere Bewegung des Schrittmotors 8 verhindert werden kann. In entsprechender Weise kann der Querschnitt des Schlauches 4 bis auf vollständige Öffnung wieder vergrößert werden.

### Beispiel 1

In Beispiel 1 wird das Abwiegen von Wasser mit der in den Figuren 1 und 2 dargestellten Vorrichtung beschrieben. Diese Bestimmung wird bei Raumtemperatur und normalen Umgebungsbedingungen durchgeführt. Als Schlauch wird ein Silikonschlauch mit einem Außendurchmesser von 8 mm und einer Wandstärke von einem Millimeter verwendet. Im Bei-spielfall soll eine Menge von 1000 g Wasser abgewogen werden.

Um eine möglichst genaue Bestimmung bei trotzdem ausreichender Schnelligkeit zu erreichen, wird das Verfahren in vier Schritten durchgeführt:

### 1. Schritt

Im ersten Verfahrensschritt wird der Schlauch aus dem völlig geschlossenen Zustand durch 280 Schrittbewegungen des Schrittmotors in den völlig geöffneten Zustand gebracht und man läßt die Flüssigkeit bei vollständig geöffnetem Schlauch in den Behälter, der sich auf der Waage befindet, strömen. Während dieses Vorgangs wird der Istwert, den die Waage anzeigt, in regelmäßigen, kurzen Zeitabständen erfaßt und von einem Mikrocomputer mit dem Sollwert von 1000 g verglichen. Sobald die Abweichung des Sollgewichts vom Istgewicht kleiner als 60 g ist, wird der Schlauch vollständig geschlossen.

### 2. Schritt

Dann wird der Schlauch auf einen kleineren Querschnitt wieder geöffnet. Hierfür wird ein Schlauchquerschnitt ausgewählt, der 40 Schrittbewegungen des Schrittmotors entspricht. Auf diese Weise strömt eine kleinere Flüssigkeitsmenge pro Zeiteinheit in den auf der Waage stehenden Behälter. Auch hierbei wird das Istgewicht in regelmäßigen Abständen gemessen und im Mikrocomputer mit dem Sollgewicht verglichen. Sobald die Abweichung des Istgewichts vom Sollgewicht kleiner als 10 g ist, wird der Schlauch durch den Schrittmotor wieder vollständig verschlossen.

Durch die beiden Verfahrensschritte 1 und 2 wird eine schnelle Annäherung des Istgewichts an das Sollgewicht erreicht, da große bzw. relativ große Flüssigkeitsmengen in einer kurzen Zeit in den Behälter fließen.

### 3. Schritt

Jetzt wird der Schlauch auf den im zweiten Verfahrensschritt ausgewählten Querschnitt geöffnet und in kurzen Abständen abwechselnd geschlossen und auf diesen Querschnitt geöffnet. Dieser Vorgang wird so lange wiederholt, bis die Abweichung des Istgewichts vom Sollgewicht kleiner als 2 g ist. Bei diesem Verfahrensschritt wird der Schlauch ca. 50 ms offengehalten, bevor er wieder vollständig verschlossen wird. Nach jedem Verschließen des Schlauches wird das Gewicht der sich im Behälter befindenden Flüssigkeitsmenge bestimmt und mit dem Sollgewicht verglichen. Wenn die Abweichung des Istgewichts vom Sollgewicht noch größer als 2 g ist, wird der Schlauch wieder auf den gewählten kleinen Querschnitt geöffnet.

### 4. Schritt

In dem jetzt folgenden vierten Verfahrensschritt wird eine langsamere, allmähliche Annäherung des Istgewichts an das Sollgewicht vorgenommen.

Dazu wird zuerst der Querschnitt des Schlauches bestimmt, bei dem gerade noch Flüssigkeit durch den Schlauch hindurchtreten kann. Dazu wird der Schlauch durch den Schrittmotor mit einer geringen Anzahl von Schritten geöffnet, beispielsweise mit 22 Schritten und anschließend sofort wieder geschlossen. Dann wird eine bestimmte Zeit, beispielsweise 0,5 s gewartet, ob eine Änderung des Istwertes auf der Waage eintritt. Ist dies nicht der Fall, so wird der Schlauch über den Schrittmotor mit einer größeren Anzahl von Schritten als beim ersten Versuch geöffnet. Beispielsweise kann die Schrittanzahl um zwei Schritte auf 24 Schritte erhöht werden. Dann wird der Schlauch wieder vollständig geschlossen und abgewartet, ob die Waage eine Reaktion zeigt. Dieses Vorgehen wird so lange durchgeführt, bis eine Änderung des Istwertes eintritt und damit der Querschnitt des Schlauches ermittelt ist, bei dem gerade noch Flüssigkeit durch diesen hindurchtreten kann. Nach der Ermittlung dieses Wertes wird jetzt wie im dritten Verfahrensschritt der Schlauch in regelmäßigen Abständen auf den empirisch ermittelten "minimalen" Querschnitt geöffnet und anschließend sofort wieder vollständig verschlossen. Auf diese Weise entsteht eine Art pulsierendes Tropfen.

Wenn die Differenz des Istwertes zum Sollwert kleiner als beispielsweise 0,3 g ist, wird nach dem Öffnen und Schließen jeweils ein längerer Zeitraum abgewartet, um eine genauere Messung zu ermöglichen. Beispielsweise kann nach jedem Öffnen und Schließen eine Sekunde abgewartet werden. Auf diese Weise ist es möglich, bei der im Beispiel vorgenommenen Wasserbestimmung Genauigkeiten von 0,05 g/kg zu bestimmender Flüssigkeit zu erreichen.

Es ist nach der Erfindung selbstverständlich möglich, die Beispiele so zu variieren, daß die Annäherung an das Sollgewicht in anderen Schritten erfolgen kann. Auch die Grenzen von 60 g, 10 g und 2 g sind nicht bindend. Genauso ist es möglich, die einzelnen Schritte unabhängig voneinander durchzuführen. So können für eine Mengenbestimmung von beispielsweise 50 g die Schritte 2., 3. und 4., für eine Mengenbestimmung von beispielsweise 5 g die Verfahrensschritte 3. und 4. und für eine Bestimmung von beispielsweise 1 g nur der Verfahrensschritt 4. durchgeführt werden.

### Beispiel 2

Mit einer erfindungsgemäßen Vorrichtung wird eine verdünnte Normallösung aus einer Normallösung höherer Konzentration hergestellt.

Dazu werden über einem auf einer Waage stehenden Behälter zwei Schläuche angeordnet, die beide durch einen über einen Schrittmotor bewegbaren Bolzen verschließbar sind, wie in den Figuren 1 und 2 dargestellt.

Zur Herstellung von 5 kg 0,1 N Natronlauge werden zuerst durch den einen Schlauch aus einem Vorratsgefäß 500 g 1 N Natronlauge abgewogen. Dabei werden in entsprechender Weise die in Beispiel 1 beschriebenen Verfahrensschritte angewendet. Nach Abwiegen der 1 N Natronlauge werden durch den zweiten Schlauch aus einem zweiten Vorratsgefäß 4500 g Wasser in den Behälter abgewogen. Auf diese Weise ist eine schnelle und einfache Verdünnung der 1 N Natronlauge möglich.

Zusätzlich kann die bei der Wägung der 1 N Natronlauge ggf. vorhandene Endabweichung des Istwertes vom Sollwert bei der darauffolgenden Wägung der Wassermenge bereits berücksichtigt werden. Auf diese Weise wird durch die Computerkontrolle die Genauigkeit des Verfahrens weiter gesteigert.

## Patentansprüche

1. Verfahren zur Kontrolle der Menge mindestens einer durch einen flexiblen Schlauch (4) fließenden oder geflossenen Flüssigkeit, dadurch gekennzeichnet, daß die Flüssigkeitsmenge als Istwert automatisch bestimmt wird, der erhaltene Istwert mit einem vorgegebenen Sollwert automatisch verglichen wird und der durchströmbare Querschnitt des Schlauches an einer Stelle in Abhängigkeit der Differenz von Ist- zu Sollwert automatisch konstantgehalten oder verändert wird.

2. Verfahren nach Anspruch 1, dadurch gekennzeichnet, daß der durchströmbare Querschnitt des Schlauches (4) schrittweise, insbesondere mit Hilfe einer durch einen Schrittmotor bewegbaren Vorrichtung, verändert wird.

3. Verfahren nach Anspruch 1 oder 2, dadurch gekennzeichnet, daß der Schlauch (4) zur Verringerung des durchströmbaren Querschnitts mit Hilfe eines Quetschelements, insbesondere eines Bolzens (6), linienförmig gegen eine Gegenfläche gedrückt wird.

4. Verfahren nach einem der vorhergehenden Ansprüche, dadurch gekennzeichnet, daß der Schlauch (4) innerhalb von weniger als 1 Sekunde, von voller Öffnung aus, vollständig verschließbar ist.

5. Verfahren nach einem der vorhergehenden Ansprüche, dadurch gekennzeichnet, daß zum Vergleich von Ist- und Sollwert und zur Einstellung des Schlauchquerschnitts ein Mikrocomputer, Mikrocontroller oder PC verwendet wird.

6. Verfahren nach einem der vorhergehenden Ansprüche, dadurch gekennzeichnet, daß zum Abwiegen von Flüssigkeiten der Istwert der durch den Schlauch (4) geflossenen Flüssigkeitsmenge auf einer Waage (1) bestimmt wird und der Schlauch (4) bei Vorliegen der gewünschten Flüssigkeitsmenge vollständig geschlossen wird, wobei insbesondere der Nullpunkt der Waage (1) mit Hilfe eines Mikrocomputers, Mikrocontrollers oder PC vor der Wägung eingestellt wird.

7. Verfahren nach Anspruch 6, dadurch gekennzeichnet, daß die abzuwiegende Flüssigkeit in mehreren Schritten durch den Schlauch (4) gelassen wird, der Schlauch (4) zwischen den einzelnen Schritten vollständig geschlossen wird und der Istwert der Flüssigkeitsmenge bestimmt wird, wobei insbesondere der durchströmbare Querschnitt des Schlauches (4) mindestens bei einem Teil der Schritte variiert wird.

8. Verfahren nach Anspruch 7, dadurch gekennzeichnet, daß zuerst ein größerer Teil der abzuwiegenden Flüssigkeit bei einem großen durchströmbaren Querschnitt des Schlauches (4), insbesondere bei vollständig geöffnetem Schlauch (4), durchgelassen wird und anschließend kleinere Teile der abzuwiegenden Flüssigkeit in weiteren Schritten bei kleineren durchströmbaren Querschnitten durchgelassen werden.

9. Verfahren nach einem der Ansprüche 6 bis 8, dadurch gekennzeichnet, daß insbesondere beim Durchlassen von kleineren Teilen der Flüssigkeit der Querschnitt des Schlauches (4) in regelmäßigen Zeitintervallen verändert, insbesondere der Schlauch (4) abwechselnd auf einen bestimmten Querschnitt geöffnet und wieder geschlossen wird.

10. Verfahren nach einem der Ansprüche 6 bis 9, dadurch gekennzeichnet, daß vor dem Durchlassen insbesondere von kleineren, insbesondere kleinsten, Teilen der Flüssigkeit der Querschnitt des Schlauches (4) bestimmt wird, bei dem gerade noch Flüssigkeit durch den Schlauch (4) hindurchtreten kann, und anschließend der Schlauch (4) beim Durchlassen der Flüssigkeit auf diesen Querschnitt geöffnet wird.

11. Verfahren nach Anspruch 9 oder 10, dadurch gekennzeichnet, daß der Zeitraum zwischen Öffnen und Schließen des Schlauches (4) und einem erneuten Öffnen und Schließen in Abhängigkeit von der abzuwiegenden Flüssigkeitsmenge variiert wird, wobei insbesondere der Zeitraum um so größer ist, je kleiner die abzuwiegende Flüssigkeitsmenge ist.

12. Verfahren nach einem der Ansprüche 6 bis 11, dadurch gekennzeichnet, daß die Bestimmung der Flüssigkeitsmengen mit einer Genauigkeit von besser als 0,1 g, insbesondere mit einer Genauigkeit von 0,05 g, durchgeführt wird.

13. Vorrichtung zur Durchführung des Verfahrens nach einem der Ansprüche 6 bis 12 mit
- mindestens einer Waage (1),
- mindestens einem mit einem Vorratsbehälter für eine Flüssigkeit verbundenen flexiblen Schlauch (4), wobei der Schlauch mindestens teilweise an einer Gegenfläche (5) vorbeigeführt ist,
- mindestens einem Schrittmotor (8),
- mindestens einem an der Kupplung des Schrittmotors (8) befestigten Bolzen (6), wobei der Bolzen (6) der der Gegenfläche gegenüberliegenden Seite des Schlauches (4) in Querrrichtung zugeordnet und schrittweise mit Hilfe des Schrittmotors (8) linienförmig gegen den Schlauch (4) bewegbar ist.

14. Vorrichtung nach Anspruch 13, dadurch gekennzeichnet, daß an der Kupplung eine Stange (10) befestigt ist, mit deren Hilfe ein Mikroschalter (12) betätigbar ist.

15. Vorrichtung nach Anspruch 13 oder 14, dadurch gekennzeichnet, daß sie einen Mikrocomputer, Mikrocontroller oder PC aufweist, der mit der Waage (1) und dem Schrittmotor (8) verbunden ist.

## Claims

1. Process for checking the quantity of at least one liquid flowing or flown through a flexible tube (4), characterized in that the liquid quantity is automatically determined as an actual value, the actual value obtained is automatically compared with a predetermined desired value and the flow-through cross-section of the tube is automatically kept constant or modified at one point as a function of the difference between the actual and the desired value.

2. Process according to claim 1, characterized in that the flow-through cross-section of the tube (4) is modified stepwise, particularly with the aid of a device movable by a stepping motor.

3. Process according to claim 1 or 2, characterized in that the tube (4) is pressed linearly against a countersurface for reducing the flow-through cross-section with the aid of a squeezing element, particularly a bolt (6).

4. Process according to one of the preceding claims, characterized in that the tube (4) can be completely closed from its complete opening position within less than 1 second.

5. Process according to one of the preceding claims, characterized in that for the comparison of the actual and desired values and for setting the tube cross-section use is made of a microcomputer, microcontroller or PC.

6. Process according to one of the preceding claims, characterized in that for the weighing of liquids determination takes place of the actual value of the liquid quantity flown through the tube (4) on a balance (1) and the tube (4) is completely closed when the desired liquid quantity is present, the zero point of the balance (1) being in particular set prior to weighing with the aid of a microcomputer, microcontroller or PC.

7. Process according to claim 6, characterized in that the liquid to be weighed is passed in several steps through the tube (4), the tube (4) is completely closed between the individual steps and the actual value of the liquid quantity is determined and in particular the flow-through cross-section of the tube (4) is varied at least in part of the steps.

8. Process according to claim 7, characterized in that firstly a larger quantity of the liquid to be weighed is allowed through with a large, flow-through cross-section of the tube (4), particularly with the tube (4) completely open, and subsequently smaller parts of the liquid to be weighed are passed through in further steps with smaller flow-through cross-sections.

9. Process according to one of the claims 6 to 8, characterized in that in particular on passing through smaller parts of the liquid the cross-section of the tube (4) is varied at regular intervals of time and in particular the tube (4) is alternately opened to a given cross-section and then closed again.

10. Process according to one of the claims 6 to 9, characterized in that, prior to passing through in particular smaller and more especially smallest parts of the liquid determination takes place of the cross-section of the tube (4) at which liquid can just pass through the said tube (4) and subsequently on passing through the liquid, the tube (4) is opened to said cross-section.

11. Process according to claim 9 or 10, characterized in that the time between opening and closing the tube (4) and a repeated opening and closing is varied as a function of the liquid quantity to be weighed and the smaller the liquid quantity to be weighed the longer the time period.

12. Process according to one of the claims 6 to 11, characterized in that the determination of the liquid quantities takes place with a precision better than 0.1 g and in particular with a precision of 0.05 g.

13. Device for performing the process according to one of the claims 6 to 12 with
- at least one balance (1),
- at least one flexible tube (4) connected to a storage container for a liquid, the tube being at least partly guided past a countersurface (5),
- at least one stepping motor (8),
- at least one bolt (6) fixed to the coupling of the stepping motor (8), said bolt (6) being associated with the side of the tube (4), in the transverse direction, which is opposite to the countersurface and is linearly movable against the tube (4) in stepwise manner with the aid of the stepping motor (8).

14. Device according to claim 13, characterized in that to the coupling is fixed a rod (10) with the aid of which a microswitch (12) can be operated.

15. Device according to claim 13 or 14, characterized in that it has a microcomputer, microcontroller or PC, which is connected to the balance (1) and the stepping motor (8).

## Revendications

1. Procédé pour contrôler la quantité d'au moins un liquide s'écoulant ou s'étant écoulé à travers un tuyau souple (4), **caractérisé** en ce qu'on détermine de façon automatique la quantité de liquide comme valeur réelle, on compare de façon automatique la valeur réelle obtenue à une valeur de consigne prédéfinie, et la section de passage du tuyau souple est, en un endroit, modifiée ou maintenue constante de façon automatique en fonction de la différence entre la valeur réelle et la valeur de consigne.

2. Procédé selon la revendication 1, **caractérisé** en ce que la section de passage du tuyau souple (4) est modifiée de façon progressive, notamment à l'aide d'un dispositif pouvant être déplacé par un moteur pas à pas.

3. Procédé selon la revendication 1 ou 2, **caractérisé** en ce que le tuyau souple (4) est, afin de réduire la section de passage, pressé linéairement contre une contre-surface à l'aide d'un élément écraseur, notamment d'un tampon (6).

4. Procédé selon une des revendications précédentes, **caractérisé** en ce que le tuyau souple (4) peut être totalement fermé en moins d'une seconde, en partant de sa pleine ouverture.

5. Procédé selon une des revendications précédentes, **caractérisé** en ce qu'on utilise un micro-ordinateur, un microprocesseur ou un ordinateur personnel pour la comparaison de la valeur réelle à la valeur de consigne et pour le réglage de la section du tuyau souple.

6. Procédé selon une des revendications précédentes, **caractérisé** en ce qu'afin de peser des liquides, on détermine sur une balance (1) la valeur réelle de la quantité de liquide qui s'est écoulée à travers le tuyau souple (4) et on ferme totalement le tuyau souple (4) en présence de la quantité souhaitée de liquide, le zéro de la balance (1) étant réglé avant le pesage, notamment à l'aide d'un micro-ordinateur, d'un microprocesseur ou d'un ordinateur personnel.

7. Procédé selon la revendication 6, **caractérisé** en ce qu'on laisse passer en plusieurs étapes à travers le tuyau souple (4) le liquide à peser, on ferme totalement le tuyau souple (4) entre les différentes étapes et on détermine la valeur réelle de la quantité de liquide, et on fait notamment alors varier la section de passage du tuyau souple (4) pour au moins une partie desdites étapes.

8. Procédé selon la revendication 7, **caractérisé** en ce qu'on laisse d'abord passer une majeure partie du liquide à peser avec une grande section de passage du tuyau souple (4), notamment avec le tuyau souple (4) totalement ouvert, puis, au cours d'autres étapes, on laisse passer de plus petites parties du liquide à peser, avec des sections de passage plus petites.

9. Procédé selon une des revendications 6 à 8, **caractérisé** en ce que, notamment lorsqu'on laisse passer de plus petites parties du liquide, on modifie la section du tuyau souple (4) à intervalles de temps réguliers, notamment on ouvre le tuyau souple (4) à une section donnée et on le referme, à tour de rôle.

10. Procédé selon une des revendications 6 à 9, **caractérisé** en ce qu'avant de laisser passer de plus petites parties du liquide, notamment de très petites parties du liquide, on détermine la section du tuyau souple (4) pour laquelle il peut juste encore y avoir un passage de liquide à travers le tuyau souple (4), puis on ouvre le tuyau souple (4) à cette section pour laisser passer le liquide.

11. Procédé selon la revendication 9 ou 10, **caractérisé** en ce qu'on fait varier l'espace de temps entre l'ouverture et la fermeture du tuyau souple (4) et une nouvelle ouverture et fermeture en fonction de la quantité de liquide à peser, l'espace de temps étant notamment d'autant plus grand que la quantité de liquide à peser est petite.

12. Procédé selon une des revendications 6 à 11, **caractérisé** en ce que la détermination des quantités de liquide est effectuée avec une précision supérieure à 0,1 g, notamment avec une précision de 0,05 g.

13. Dispositif pour la mise en oeuvre du procédé selon une des revendications 6 à 12, **comprenant**:
- au moins une balance (1),
- au moins un tuyau souple (4) relié à un réservoir de stockage d'un liquide, le tuyau souple étant guidé au moins pour partie le long d'une contre-surface (5),
- au moins un moteur pas à pas (8),
- au moins un tampon (6) fixé à l'embrayage du moteur pas à pas (8), le tampon (6) étant associé en direction transversale au côté du tuyau souple (4) qui est opposé à la contre-surface, et pouvant être déplacé linéairement contre le tuyau souple (4) de façon progressive à l'aide du moteur pas à pas (8).

14. Dispositif selon la revendication 13, **caractérisé** en ce qu'une tringle (10) est fixée à l'embrayage, tringle qui permet d'actionner un commutateur miniature (12).

15. Dispositif selon la revendication 13 ou 14, **caractérisé** en ce qu'il présente un micro-ordinateur, microprocesseur ou ordinateur personnel, qui est relié à la balance (1) et au moteur pas à pas (8).
